# EUROPÄISCHE PATENTSCHRIFT

(11) **EP 3 094 497 B1**
(45) Veröffentlichungstag und Bekanntmachung des Hinweises auf die Patenterteilung: **22.04.2020**
(21) Anmeldenummer: 15700330.2
(22) Anmeldetag: 02.01.2015
(51) Int. Cl.: B60B 1/04, B60B 1/02, B60B 21/06

(54) **SPEICHENRADFELGE**
SPOKE WHEEL RIM
JANTE DE ROUE À RAYONS

(30) Priorität: 14.01.2014 DE 102014200541
(43) Veröffentlichungstag der Anmeldung: 23.11.2016
(73) Patentinhaber: Saxess Holding GmbH, 61476 Kronberg im Taunus (DE)
(72) Erfinder: FLUDER, Matthias, 08297 Zwönitz (DE); GUMPRICH, Pierre, 08058 Zwickau (DE)
(74) Vertreter: Westphal, Mussgnug & Partner Patentanwälte mbB
(86) Internationale Anmeldenummer: PCT/EP2015/050012
(87) Internationale Veröffentlichungsnummer: WO 2015/106976

(56) Entgegenhaltungen:
- WO-A1-2009/081242
- GB-A- 295 300
- US-A- 759 124
- US-A- 2 034 360
- US-A1- 2001 019 222
- US-B1- 6 238 008

## Beschreibung

Die vorliegende Erfindung betrifft eine Speichenradfelge für einen schlauchlosen Reifen mit einem Felgenring gemäß dem Oberbegriff des Anspruchs 1. Die Erfindung betrifft außerdem ein Herstellungsverfahren zur Herstellung einer derartigen Speichenradfelge gemäß Anspruch 7.

Bei Motorrädern und Fahrrädern, teilweise auch bei anderen Fahrzeugen, kommen oftmals Speichenräder zum Einsatz, die aufgrund ihrer Flexibilität innerhalb der Konstruktion und auch aufgrund ihrer Reparaturfreundlichkeit große Vorteile bieten. Zudem sind derartige Speichenradfelgen optisch äußerst ansprechend. Eine Speichenradfelge besteht üblicherweise aus einem Felgenring, der ein Felgenbett und zwei Felgenhörner aufweist, sowie Speichen, die eine Nabe mit dem Felgenring verbinden. Die Speichen sind dabei über sogenannte Speichennippel in Punzen am Felgenring gehalten, wobei die Punzen Vertiefungen im Felgenring sind und zur Ausrichtung und Fixierung der Speichen bzw. Speichennippel dienen. Die Speichen sind dabei über die Speichennippel in den jeweiligen Punzen gehalten und über ein Schraubgewinde miteinander verschraubt. Durch eine Verdrehung des Speichennippels relativ zur Speiche kann letztere gespannt bzw. justiert werden. Eine Anbindung des Speichennippels am Felgenring erfolgt über eine Bohrung innerhalb der Punze, wobei eine derartige Bohrung eine Leckagemöglichkeit darstellt, so dass derartige Speichenräder lediglich mit einen Schlauch zwischen Felgenring und eigentlichem Reifen benützt werden können. Dieser Schlauch wiederum wird durch ein sogenanntes Felgenband vor einem Kontakt mit den Speichen bzw. Speichennippeln geschützt.

Aus der DE 1 002 210 A1 ist eine gattungsgemäße Speichenradfelge für einen schlauchlosen Reifen mit einem Felgenring bekannt, der ein Felgenbett und zwei Felgenhörner aufweist. Ebenfalls vorgesehen sind Speichen, die eine Nabe mit dem Felgenring verbinden. Da die Speichen das Felgenbett durchstoßen, ist eine Einlage von zwei zentrierenden Dichtwülsten vorgesehen.

Aus der DE 10 2004 055 892 A1 ist eine weitere gattungsgemäße Speichenradfelge bekannt, bei welcher ebenfalls eine Dichtungsvorrichtung vorgesehen ist, die im Bereich eines Felgenbettes in einer Vertiefung angeordnet ist und Dichtflächen im Bereich beidseits einer Felgenmittenebene aufweist. Durch die Dichtungsvorrichtung ist ebenfalls die Verwendung eines schlauchlosen Reifens möglich.

Aus der DE 10 2011 081 069 A1 ist eine weitere Speichenradfelge für einen schlauchlosen Reifen mit einer Nabe und einem Felgenring bekannt. An einer Felgeninnenseite sind in Umfangsrichtung verteilt nach innen abstehende Speichenhalter vorgesehen, die jeweils eine Ausnehmung aufweisen. Die Nabe selbst ist über mehrere Speichen mit den Speichenhaltern des Felgenrings verbunden, wobei die in den Speichenhaltern vorgesehenen Ausnehmungen jeweils einen nach innen zur Nabe zu einer Seite des Speichenhalters hin offenen Schlitz aufweisen, so dass bei der Speichenmontage ein Endabschnitt einer Speiche von der offenen Seite der Schlitzes her in die Ausnehmung des Speichenhalters einführbar ist. Hierdurch soll eine Speichenradfelge mit vergleichsweise hoher Biege- und Torsionssteifigkeit erreicht werden.

Weitere Speichenradfelgen sind aus der US 2 034 360 A, US 2001/019222 A1, GB 295 300 A, US 6 238 008 B1, US 759 124 A und der WI 2009/081242 A1 bekannt.

Nachteilig bei den aus dem Stand der Technik bekannten Speichenrädern ist insbesondere, dass bei der Verwendung eines Schlauches dieser anfällig für Beschädigungen ist, welche durch Durchschläge beim Überfahren von Kanten oder anderen Hindernissen entstehen. Dieses Problem wird zusätzlich verschärft, sofern sogenannte Reifenspanner zum Einsatz kommen, welche beispielsweise zum Festsitz des Reifens, insbesondere bei hoher Antriebsleistung oder geringem Luftdruck dienen. Der Schlauch und ein zusätzlich diesen schützendes Felgenband erhöhen jedoch das Gewicht, wodurch ein erhöhtes Rotationsträgheitsmoment geschaffen und die Manövrierfähigkeit eines mit einem derartigen Speichenrad ausgestatteten Kraftfahrzeugs reduziert wird. Zugleich ist ein derartiger Schlauch aufgrund seiner hohen Flexibilität meist nicht alterungsbeständig und muss daher turnusgemäß ausgetauscht werden. Durch die Verwendung eines Schlauches im Reifeninneren erhöht sich zudem auch die Abrollreibung, wodurch beispielsweise ein Kraftstoffverbrauch erhöht wird.

Um diese Nachteile zu vermeiden, gibt es bereits auch Speichenradfelgen, die im Bereich des Felgenbetts bis auf eine Ventilbohrung geschlossen sind, so dass auf den Einsatz eines Felgenbandes und eines das Gewicht erhöhenden Schlauchs verzichtet werden kann. Derartige Speichenräder werden üblicherweise als Guss- oder Schmiederäder ausgebildet und sind dadurch nicht nur vergleichsweise teuer und unwirtschaftlich (Schmiederad), sondern zudem aufgrund einer eingeschränkten Elastizität des Materials auch bruchanfällig (Gussrad).

Die vorliegende Erfindung beschäftigt sich daher mit dem Problem, für eine Speichenradfelge der gattungsgemäßen Art eine verbesserte Ausführungsform anzugeben, die sich insbesondere durch ein geringes Gewicht und eine einfache Montage auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, Speichen einer Speichenradfelge an einem Felgenring derselben in entsprechenden Nuten durch Schrauben zu fixieren, wobei die Nuten den Felgenring nicht durchstoßen, so dass die Speichenradfelge für einen schlauchlosen Reifen verwendet werden kann. Der Felgenring besitzt in bekannter Weise ein Felgenbett sowie zwei Felgenhörner und ist über die Speichen mit einer Nabe der Speichenradfelge verbunden. Erfindungsgemäß sind am Felgenring in Umfangsrichtung verlaufende Nuten vorgesehen, in welche die Speichen jeweils mit einem eine quer zur Speichenachse ausgebildete Durchgangsöffnung aufweisenden Speichenkopf eingreifen. An jeder Nut ist eine diese querende und von außen eingeschraubte Schraube vorgesehen, die durch die Durchgangsöffnung des Speichenkopfes als Passung hindurchgreifend in eine Einschrauböffnung des Felgenrings eingeschraubt und die Speiche dadurch fixiert ist. Die Nuten sind in einem Bereich zwischen dem Felgenhorn und dem Felgenbett angeordnet.

Die jeweiligen Schrauben verlaufen dabei im Wesentlichen in Achsrichtung der Speichenradfelge, wodurch eine vergleichsweise einfache Montage und Demontage der einzelnen Speichen möglich ist. Die Speichen werden somit nicht wie bisher über Speichennippel und Punzen in Durchgangsöffnungen im Felgenbett gehalten, so dass der Felgenring mit Ausnahme der Ventilöffnung keine weiteren leckageanfälligen Durchbrüche aufweist. Zugleich kann durch den Entfall des bisher erforderlichen Schlauches sowie durch den Entfall des bisher erforderlichen Felgenbandes das Gewicht des Rades reduziert und dadurch die Manövrierfähigkeit erhöht werden. Durch den Entfall des Schlauchs verringert sich auch die Abrollreibung des Rades, was bei einem Einsatz an einem Kraftfahrzeug, beispielsweise an einem Motorrad, für eine Reduzierung des Kraftstoffverbrauchs sorgt. Generell lässt sich die erfindungsgemäße Speichenradfelge wirtschaftlich mit konventionellen Mitteln in Serienproduktion herstellen und ist dadurch kostengünstig und für den Großserieneinsatz geeignet. Die Einzelteile der Speichenradfelge, das heißt der Felgenring, die Speichen sowie die Nabe, sind einfach zu montieren und zugleich kann die erfindungsgemäße Speichenradfelge wie konventionelle Speichenräder zentriert werden. Durch die Schrauben ist die erfindungsgemäße Speichenradfelge zudem einfach zerlegbar und beispielsweise bei einem Speichenbruch auch reparabel.

Bei einer vorteilhaften Weiterbildung der erfindungsgemäßen Lösung sind die Schrauben als Passschrauben ausgebildet. Durch die Ausbildung als Passschraube erfolgt ein exakt definiertes Fixieren derselben in der Durchgangsöffnung des Speichenkopfes, wodurch eine spielfreie Fixierung der Speiche am Felgenring möglich ist.

Zweckmäßig verlaufen die Schrauben im Wesentlichen in Achsrichtung der Speichenradfelge, wobei eine Schraubenachse um maximal 30° von der Achsrichtung der Speichenradfelge abweichen kann. Durch die Ausrichtung der Schraubenachse im Wesentlichen in Achsrichtung der Speichenradfelge ist stets eine leichte Zugänglichkeit der Schraube gegeben, wodurch insbesondere auch eine Montage der erfindungsgemäßen Speichenradfelge sowie beispielsweise eine Wartung derselben bei einem Speichenaustausch einfach möglich sind.

Die Erfindung beruht weiter auf dem allgemeinen Gedanken, die zuvor beschriebene Speichenradfelge mittels eines einfachen, kostengünstigen Herstellungsverfahrens herstellen zu können. Hierzu wird zunächst der Felgenring hergestellt, bzw. aus einem Leichtmetall, insbesondere aus Aluminium, durch Runden und Umformen eines Leichtmetallprofils zu einem Kreisringprofil, gratfreies Sägen zum Felgenring und passgenaues Zusammenfügen der Felgenringenden zum Felgenring. Anschließend werden die Einschrauböffnungen in den Felgenring eingebracht, vorzugsweise gebohrt, und die Nuten gefräst. Die Bohrungen werden dabei vorzugsweise im Bereich von Laschen angeordnet. Anschließend werden diese Laschen quer zur Bohrungsrichtung mit der Nut versehen, beispielsweise durch eine entsprechende Fräsung. Rein theoretisch kann auch zuerst eine ringförmige durchgehende Nut gefräst werden, die in einem späteren Arbeitsschritt durch Freifräsen unterbrochen und so die Laschen hergestellt werden. Nun werden die Speichen mit ihrem Speichenkopf in die Nut eingeführt, bis jeweils die Durchgangsöffnungen mit den Einschrauböffnungen fluchten. Jetzt können die Schrauben, die Durchgangsöffnungen der Speichen jeweils als Passung durchgreifend, in die Einschrauböffnungen eingeschraubt werden, wonach die Speichen mit ihrem dem Speichenkopf abgewandten Längsende über Speichennippel mit einer Nabe verbunden werden. Durch ein Relativverdrehen des Speichennippels zur Speiche kann abschließend die Speichenradfelge ausgerichtet werden. Zu einer Reduzierung des Gewichts oder zur Bearbeitung von Bremsflächen kann der Felgenring mechanisch bearbeitet, insbesondere spanend oder schleifend bearbeitet werden, um das Gewicht am Felgenring und damit das Rotationsträgheitsmoment zu reduzieren. Das Spannen der Speichenradfelge erfolgt durch ein Verdrehen der Speichennippel, wie dies aus dem Stand der Tätigkeit bereits bekannt ist. Die Fixierung der jeweiligen Speichen durch die Schraube kann beispielsweise mittels Kraftschluss oder mittels einer formschlüssigen Verbindung erfolgen. Selbstverständlich ist auch eine Kombination der beiden Befestigungsarten denkbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Ansicht auf einen Felgenring einer erfindungsgemäßen Speichenradfelge,
- Fig. 2: eine Schnittdarstellung durch die Ebene A-A gemäß der Fig. 1,
- Fig.3: eine Ansicht auf die erfindungsgemäße Speichenradfelge mit eingebauten Speichen,
- Fig.4: eine Schnittdarstellung durch die Speichenradfelge im Bereich einer Anbindung der Speiche an einen Felgenring,
- Fig.5: eine separate Darstellung einer in der erfindungsgemäßen Speichenradfelge einsetzbaren Speiche,
- Fig.6: eine separate Darstellung einer in der erfindungsgemäßen Speichenradfelge einsetzbaren Schraube.

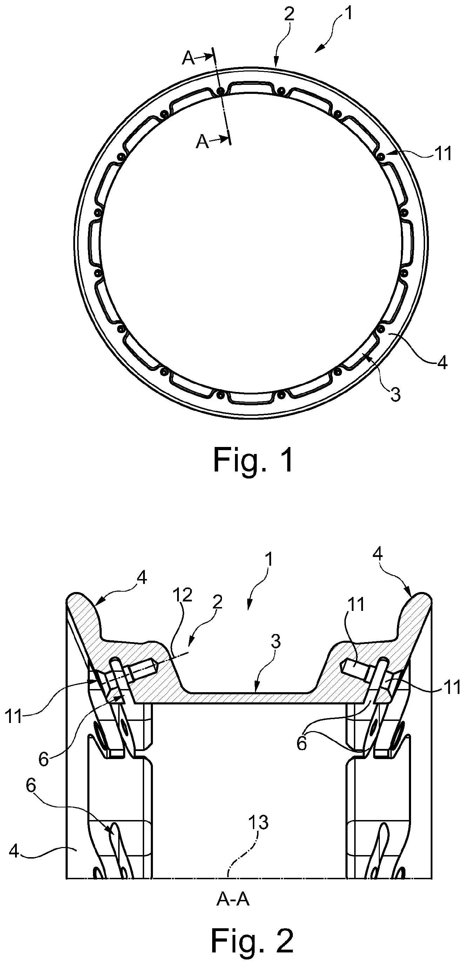

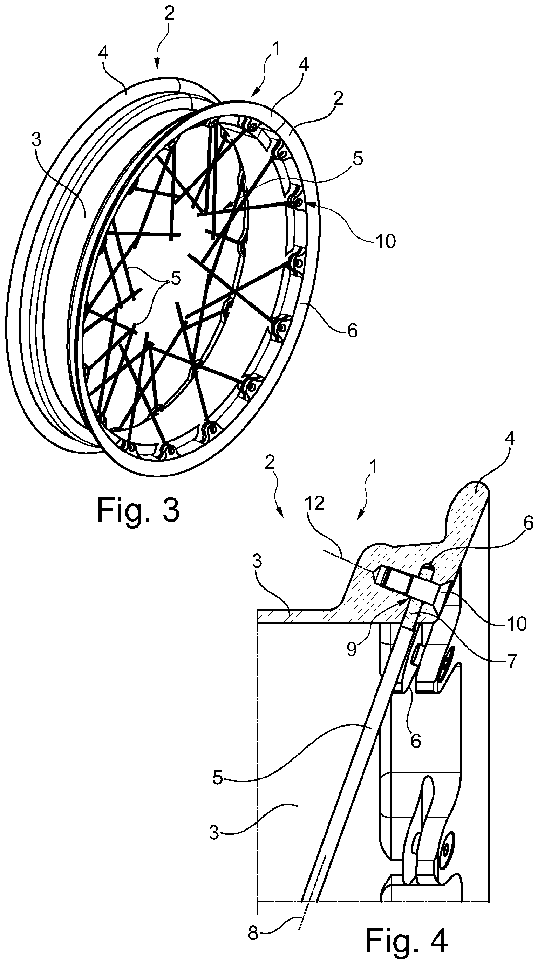

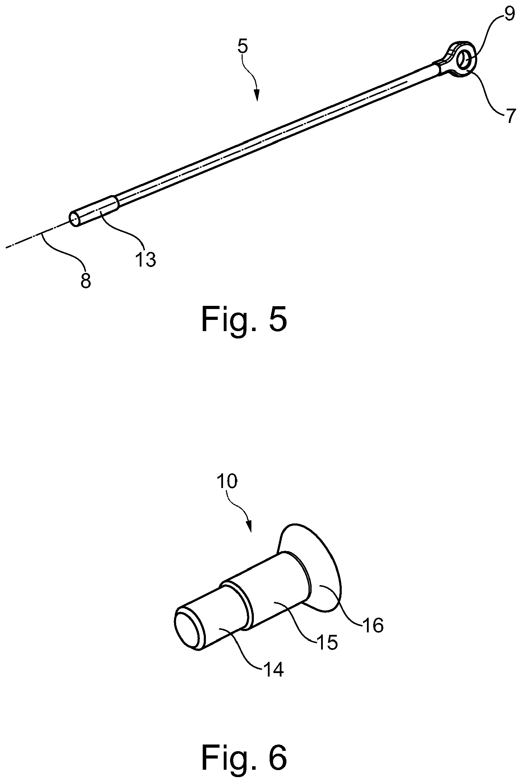

Entsprechend den Fig. 1 bis 4, weist eine erfindungsgemäße Speichenradfelge 1 für einen nicht gezeigten schlauchlosen Reifen, einen Felgenring 2 auf, der ein Felgenbett 3 sowie zwei Felgenhörner 4 besitzt. Der Felgenring 2 ist dabei über Speichen 5 mit einer nicht gezeigten Nabe verbunden. Erfindungsgemäß sind nun am Felgenring 2 in Umfangsrichtung verlaufende Nuten 6 vorgesehen, in welche die Speichen 5 jeweils mit einem einen Speichenkopf 7 aufweisenden Längsende eingreifen (vgl. insbesondere Fig. 4). Der Speichenkopf 7 weist eine quer zur Speichenachse 8 ausgebildete Durchgangsöffnung 9 auf (vgl. insbesondere Fig. 5), welche in der Montageposition der Speiche 5 mit einer im Felgenring 2 befindlichen Einschrauböffnung 11 fluchtet. Die Einschrauböffnung 11 weist ein Innengewinde auf. An jeder Nut 6 ist eine diese querende und von außen einschraubbare Schraube 10 vorgesehen. Die Schraube 10 wird dabei mit ihrem Außengewinde 14 (vgl. insbesondere Fig. 6) in die Einschrauböffnung 11 am Felgenring 2 eingeschraubt, wobei die Schraubenachse 12 im Wesentlichen in Achsrichtung der Speichenradfelge 1 verläuft. Die Schraubenachse 12 kann aufgrund der Neigung der einzelnen Speichen 5 um maximal bis zu 30° von der Achsrichtung der Speichenradfelge 1 abweichen, wobei die Achsrichtung der Achse 13 der Speichenradfelge 1 entspricht.

Die Nuten 6 sind, wie dies insbesondere den Fig. 2 und 4 zu entnehmen ist, in einem Bereich zwischen dem jeweiligen Felgenhorn 4 und dem Felgenbett 3 angeordnet, wobei der Felgenring 2 insbesondere im Bereich der Felgenhörner 4 mechanisch, beispielsweise spanend, nachbearbeitet werden kann, um hier eine Gewichtsreduzierung möglichst außen am Felgenring 2 zu erreichen, wodurch dessen Rotationsträgheitsmoment reduziert werden kann. Die Schraube 10 kann als Passschraube ausgebildet sein. Der Felgenring 2 kann aufgrund eines gewünschten geringen Rotationsträgheitsmoments aus einem Leichtmetall, beispielsweise aus Aluminium ausgebildet sein.

Der Betrieb eines mit einer erfindungsgemäßen Speichenradfelge 1 ausgestatteten Fahrzeugrades ist auch mit niedrigem Luftdruck möglich, was besondere Vorteile im Gelände schafft. Im Geländeeinsatz kann es notwendig sein, mit geringem Luftdruck zu fahren, da sich dadurch die Reifenauflagefläche gegenüber der Fahrbahn vergrößert und somit die Traktion verbessert wird. Ein herkömmliches Speichenrad mit Schlauch kann aber nicht mit beliebig niedrigem Luftdruck gefahren werden, da sonst die Gefahr besteht, dass eine Relativbewegung zwischen Reifen und Felge stattfindet. Diese Relativbewegung hätte ein Abreißen des Ventils am Luftschlauch zur Folge. Aus diesem Grund werden im Geländesport Reifenspanner eingesetzt, mit den bereits zum Stand der Technik erwähnten Gefahren für den Luftschlauch. Bei einem Schlauchlos-System ist eine Relativbewegung zwischen Reifen und Felge bis zu einer gewissen Grenze unproblematisch, d.h. sie führt nicht sofort zum Luftdruckabfall.

Hergestellt wird die erfindungsgemäße Speichenradfelge 1 indem zunächst der Felgenring 2 hergestellt wird, beispielsweise durch Runden und Umformen eines Leichtmetallprofils zu einem Kreisringprofil, gratfreies Sägen zum Felgenring 2 und passgenaues Zusammenfügen der Felgenringenden zum Felgenring 2. Anschließend werden die Einschrauböffnungen 11 in den Felgenring 2 eingebracht, insbesondere gebohrt, und die Nuten 6 gefräst. Die Speichen 5 werden sodann jeweils mit ihrem Speichenkopf 7 in die Nut 6 eingeführt, bis die Durchgangsöffnung 9 mit der Einschrauböffnung 11 fluchtet. Anschließend werden die Schrauben 10, mit ihrem Schaft 15 (vgl. insbesondere Fig. 6) die Durchgangsöffnungen 9 der Speichen 5 jeweils als Passung durchgreifend, mit ihren Außengewinde 14 (vgl. insbesondere Fig. 6) in die Einschrauböffnungen 11 eingeschraubt, bis der hier als Senkkopf ausgebildete Schraubenkopf 16 (vgl. insbesondere Fig. 6) mit dem Felgenkörper in Anlage kommt. An ihrem dem Speichenkopf 7 abgewandten Ende wird jede Speiche 5 über einen auf ein Außengewinde 13 (vgl. insbesondere Fig. 5) der Speiche 5 aufschraubbaren Speichennippel mit einer Nabe verbunden, wobei durch ein Relativverdrehen des Speichennippels zur Speiche 5 die Speichenradfelge 1 ausgerichtet wird.

Mit der erfindungsgemäßen Speichenradfelge 1 lassen sich folgende Vorteil im Vergleich zu herkömmlichen Speichenradfelgen realisieren:
- es ist die Verwendung eines schlauchlosen Reifens möglich, so dass ein bisher erforderlicher Schlauch sowie ein Felgenband entfallen können, wodurch die Masse des Fahrzeugrades reduziert und die Manövrierfähigkeit des Fahrzeugs verbessert werden kann,
- durch den Entfall des Schlauchs verringert sich die Abrollreibung des Fahrzeugrads,
- die Anfälligkeit des Schlauchs für Undichtigkeit, beispielsweise durch Alterung oder Quetschungen, entfällt,
- die erfindungsgemäße Speichenradfelge 1 hat in etwa die gleiche Masse wie eine konventionelle Speichenradfelge, so dass keine negative Beeinflussung Manövrierfähigkeit des Fahrzeugs zu befürchten ist,
- eine Undichtigkeit des Felgenrings 2 ist systemisch ausgeschlossen, da sich im Felgenring 2 bis auf das Ventilloch keine Durchbrüche befinden,
- der Betrieb des Fahrzeugrades mit niedrigem Luftdruck ist dennoch möglich,
- die Dehngrenze des Felgenmaterials liegt auf dem Niveau von konventionellen Speichenradfelgen und ist daher auch für den Geländeeinsatz geeignet,
- die erfindungsgemäße Speichenradfelge 1 ist wirtschaftlich mit konventionellen Mitteln in Großserienproduktion herstellbar,
- die Einzelteile des Fahrzeugrades, das heißt die Speichen 5, Schrauben 10, etc. sind einfach zu montieren, wodurch die Speichenradfelge 1 wie ein konventionelles Speichenrad zentrierbar ist,
- die Speichenradfelge 1 ist mit einfachem Werkzeug (Schraubenzieher und Gewindeschlüssel) zerlegbar und reparabel (z.B. bei einem Speichenbruch).

## Patentansprüche

1. Speichenradfelge (1) für einen schlauchlosen Reifen mit einem Felgenring (2), der ein Felgenbett (3) und zwei Felgenhörner (4) aufweist, sowie mit Speichen (5), die eine Nabe mit dem Felgenring (2) verbinden, wobei
- am Felgenring (2) in Umfangsrichtung verlaufende Nuten (6) vorgesehen sind, in welche die Speichen (5) jeweils mit einem komplementär ausgebildeten Speichenkopf (7) eingreifen,
- jeder Speichenkopf (7) eine quer zur Speichenachse (8) ausgebildete Durchgangsöffnung (9) aufweist,
- an jeder Nut (6) eine diese querende und von außen eingeschraubte Schraube (10) vorgesehen ist,
- die Schraube (10) durch die Durchgangsöffnung (9) des Speichenkopfes (7) als Passung hindurchgreifend in eine Einschrauböffnung (11) des Felgenrings (2) eingschraubt und die Speiche (5) dadurch fixiert ist, **dadurch gekennzeichnet, dass**
- die Nuten (6) in einem Bereich zwischen dem Felgenhorn (4) und dem Felgenbett (3) angeordnet sind.

2. Speichenradfelge nach Anspruch 1, **dadurch gekennzeichnet, dass** die Schrauben (10) im Wesentlichen in Achsrichtung der Speichenradfelge (1) verlaufen.

3. Speichenradfelge nach Anspruch 1 oder 2, **dadurch gekennzeichnet, dass** die Schrauben (10) als Passschrauben ausgebildet sind.

4. Speichenradfelge nach einem der vorhergehenden Ansprüche, **dadurch gekennzeichnet, dass** eine Schraubenachse (12) der Schraube (10) um maximal 30° von der Achsrichtung der Speichenradfelge (1) abweicht.

5. Speichenradfelge nach einem der vorhergehenden Ansprüche, **dadurch gekennzeichnet, dass** der Felgenring (2) insbesondere im Bereich der Felgenhörner (4), mechanisch, insbesondere spanend, nachbearbeitet ist.

6. Speichenradfelge nach einem der Ansprüche 1 bis 5, **dadurch gekennzeichnet, dass** zumindest der Felgenring (2) aus Leichtmetall, insbesondere aus Aluminium, ausgebildet ist.

7. Verfahren zur Herstellung einer Speichenradfelge (1) nach einem der vorhergehenden Ansprüche, bei dem
- der Felgenring (2) durch Runden und Umformen eines Leichtmetallprofils zu einem Kreisringprofil, gratfreies Sägen zum Felgenring und passgenaues Zusammenfügen der Felgenringenden zum Felgenring (2) hergestellt wird,
- die Einschrauböffnungen (11) in den Felgenring (2) eingebracht werden,
- die Nuten (6) gefräst werden,
- die Speichen (5) mit ihrem Speichenkopf (7) in die Nut (6) eingeführt werden, bis die Durchgangsöffnung (9) mit der Einschrauböffnung (11) fluchtet,
- die Schrauben (10) die Durchgangsöffnungen (9) der Speichen (5) jeweils als Passung durchgreifend, in die Einschrauböffnungen (11) eingeschraubt werden,
- die Speichen (5) an ihrem dem Speichenkopf (7) abgewandten Ende über Speichennippel mit einer Nabe verbunden werden,
- durch ein Relativverdrehen des Speichennippels zur Speiche (5) die Speichenradfelge (1) ausgerichtet wird.

## Claims

1. Spoke wheel rim (1) for a tubeless tyre with a rim ring (2) which comprises a rim base (3) and two rim flanges (4), and with spokes (5) which connect a hub to the rim ring (2), wherein
- grooves (6) are provided on the rim ring (2) running in the circumferential direction, in which the spokes (5) each engage with a complementarily formed spoke head (7),
- each spoke head (7) has a passage opening (9) formed transversely to the spoke axis (8),
- each groove (6) is provided with a screw (10) which crosses the groove (6) and is screwed in from outside,
- the screw (10) is screwed into a screw-in opening (11) of the rim ring (2) through the passage opening (9) of the spoke head (7) as a fit and the spoke (5) is thereby fixed, **characterised in that**
- the grooves (6) are arranged in an area between the rim flange (4) and the rim base (3).

2. Spoke wheel rim according to claim 1, **characterized in that** the screws (10) run substantially in the axial direction of the spoke wheel rim (1).

3. Spoke wheel rim according to claim 1 or 2, **characterized in that** the screws (10) are formed as fitting screws.

4. Spoke wheel rim according to one of the preceding claims, **characterized in that** a screw axis (12) of the screw (10) deviates by a maximum of 30° from the axial direction of the spoke wheel rim (1).

5. Spoked wheel rim according to one of the preceding requirements, **characterised in that** the rim ring (2) is finished, in particular machined, in particular in the region of the rim flanges (4).

6. Spoke wheel rim according to one of the claims 1 to 5, **characterised in that** at least the rim ring (2) is made of light metal, in particular aluminium.

7. Method for producing a spoke wheel rim (1) according to one of the preceding claims, in which
- the rim ring (2) is produced by rounding and shaping a light metal profile into a circular ring profile, sawing it without burrs into the rim ring (2) and joining the rim ring ends into the rim ring (2) with an exact fit,
- the screw-in openings (11) are made in the rim ring (2),
- the grooves (6) are milled,
- the spokes (5) with their spoke head (7) are inserted into the groove (6) until the passage opening (9) is aligned with the screw-in opening (11),
- the screws (10) are screwed into the screw-in openings (11), each passing through the passage openings (9) of the spokes (5) as a fit,
- the spokes (5) are connected to a hub at their end facing away from the spoke head (7) via spoke nipples,
- the spoke wheel rim (1) is aligned by turning the spoke nipple relative to the spoke (5).

## Revendications

1. Jante de roue à rayons (1) pour un pneu sans chambre avec un anneau de jante (2), lequel comprend une base de jante (3) et deux rebords de jante (4), ainsi que des rayons (5) qui relient un moyeu à l'anneau de jante (2), selon laquelle
- des rainures (6) s'étendant dans la direction périphérique sont prévues sur l'anneau de jante (2), rainures dans lesquelles les rayons (5) viennent respectivement en prise avec une tête de rayon (7) complémentaire,
- chaque tête de rayon (7) comprend une ouverture traversante (9) perpendiculaire à l'axe de rayon (8),
- au niveau de chaque rainure (6), une vis (10) perpendiculaire à ladite rainure et vissée de l'extérieur est prévue,
- la vis (10) est vissée dans une ouverture de vissage (11) de l'anneau de jante (2) à travers l'ouverture traversante (9) de la tête de rayon (7) en passant à travers celle-ci de manière ajustée, fixant ainsi le rayon (5), **caractérisée en ce que**
- les rainures (6) sont disposées dans une zone située entre le rebord de jante (4) et la base de jante (3).

2. Jante de roue à rayons selon la revendication 1, **caractérisée en ce que** les vis (10) s'étendent essentiellement dans la direction d'axe de la jante de roue à rayons (1).

3. Jante de roue à rayons selon l'une des revendications 1 ou 2, **caractérisée en ce que** les vis (10) sont des vis d'ajustage.

4. Jante de roue à rayons selon l'une des revendications précédentes, **caractérisée en ce qu'**un axe de vis (12) de la vis (10) diverge de maximum 30° de la direction d'axe de la jante de roue à rayons (1).

5. Jante de roue à rayons selon l'une des revendications précédentes, **caractérisée en ce que** l'anneau de jante (2) est reprise en usinage, en particulier par enlèvement de copeaux, en particulier dans la zone des rebords de jante (4).

6. Jante de roue à rayons selon l'une des revendications 1 à 5, **caractérisée en ce qu'**au moins l'anneau de jante (2) est formé d'un métal léger, en particulier d'aluminium.

7. Procédé de fabrication d'une jante de roue à rayons (1) selon l'une des revendications précédentes, selon lequel
- on fabrique l'anneau de jante (2) par arrondissement et formage d'un profil de métal léger pour former un profil d'anneau de cercle, sciage sans formation de copeaux pour former un anneau de jante, et assemblage de manière ajustée des extrémités de l'anneau de jante pour former l'anneau de jante (2),
- on pratique les ouverture de vis (11) dans l'anneau de jante (2),
- on fraise les rainures (6),
- on introduit les rayons (5) avec leur tête de rayon (7) dans la rainure (6) jusqu'à ce que l'ouverture traversante (9) soit alignée avec l'ouverture de vis (11),
- on visse les vis (10) dans les ouvertures de vis (11) en les faisant passer respectivement de manière ajustée dans les ouvertures traversantes (9) des rayons (5),
- on relie les rayons (5) à un moyeu au niveau de leur extrémité opposée à la tête de rayon (7) via des écrous de rayon,
- on aligne la jante de roue à rayons (1) en tournant les écrous de rayon par rapport au rayon (5).
